# EUROPÄISCHE PATENTSCHRIFT

(11) **EP 3 410 405 B1**
(45) Veröffentlichungstag und Bekanntmachung des Hinweises auf die Patenterteilung: **21.01.2026**
(21) Anmeldenummer: 18185218.7
(22) Anmeldetag: 11.10.2010
(51) Int. Cl.: G06T 19/00

(54) **VERFAHREN ZUR DARSTELLUNG VON VIRTUELLER INFORMATION IN EINER ANSICHT EINER REALEN UMGEBUNG**
METHOD FOR REPRESENTING VIRTUAL INFORMATION IN A VIEW OF A REAL ENVIRONMENT
PROCÉDÉ DE REPRÉSENTATION DES INFORMATIONS VIRTUELLES DANS UNE VUE D'UN ENVIRONNEMENT RÉEL

(30) Priorität: 12.10.2009 DE 102009049073
(43) Veröffentlichungstag der Anmeldung: 05.12.2018
(62) Teilanmeldung aus: 10768226.2
(73) Patentinhaber: Apple Inc., Cupertino CA 95014 (US)
(72) Erfinder: MEIER, Peter, 80634 München (DE); KUHN, Michael, 80686 München (DE); ANGERMANN, FRANK, 81829 München (DE)
(74) Vertreter: Lang, Johannes

(56) Entgegenhaltungen:
- KAR WEE CHIA ET AL: "Online 6 DOF Augmented Reality Registration from Natural Features", PROCEEDINGS / INTERNATIONAL SYMPOSIUM ON MIXED AND AUGMENTED RALITY : ISMAR 2002 ; SEPTEMBER 30 - OCTOBER 1,2002, DARMSTADT, GERMANY, IEEEE COMPUTER SOCIETY, LOS ALAMITOS, CALIF. [U.A.], 30 September 2002 (2002-09-30), pages 305, XP058275010, ISBN: 978-0-7695-1781-0
- THUONG N. HOANG ET AL: "Precise Manipulation at a Distance in Wearable Outdoor Augmented Reality", 11 October 2009 (2009-10-11), XP002616414, Retrieved from the Internet <URL:https://www.icg.tugraz.at/~reitmayr/lgo/> [retrieved on 20110112]
- GERHARD REITMAYR ET AL: "Going out: robust model-based tracking for outdoor augmented reality", MIXED AND AUGMENTED REALITY, 2006. ISMAR 2006. IEEE/ACM INTERNATIONAL SYMPOSIUM ON, IEEE, PI, 1 October 2006 (2006-10-01), pages 109 - 118, XP031014657, ISBN: 978-1-4244-0650-0
- ZHIYING ZHOU ET AL: "Robust Pose Estimation for Outdoor Mixed Reality with Sensor Fusion", 19 July 2009, UNIVERSAL ACCESS IN HUMAN-COMPUTER INTERACTION. APPLICATIONS AND SERVICES, SPRINGER BERLIN HEIDELBERG, BERLIN, HEIDELBERG, PAGE(S) 281 - 289, ISBN: 978-3-642-02712-3, XP019122846

## Beschreibung

Die vorliegende Erfindung betrifft ein Verfahren zur Darstellung von virtueller Information in einer Ansicht einer realen Umgebung,

### Hintergrund der Erfindung

Augmented Reality (AR) ist eine Technologie, welche virtuelle Daten mit der Realität überlagert und somit die Zuordnung von Daten mit der Realität erleichtert. Nach dem Stand der Technik ist der Einsatz mobiler AR-Systeme bereits bekannt. In den vergangenen Jahren haben sich leistungsfähige mobile Geräte (z.B. Smartphones) als geeignet für den AR-Einsatz herausgestellt. Sie haben inzwischen vergleichsweise große Farbdisplays, eingebaute Kameras, gute Prozessoren und zusätzliche Sensoren, wie zum Beispiel Orientierungssensoren und GPS. Zusätzlich kann die Position des Gerätes über Funknetze angenähert werden.

In der Vergangenheit wurden verschiedene Projekte auf mobilen Geräten mit AR durchgeführt. Dabei wurden zunächst spezielle optische Markierungen eingesetzt, um die Position und Orientierung des Gerätes festzustellen. Bezüglich AR, welches auch weiträumig einsetzbar ist, auch large area AR genannt, wurden in Zusammenhang mit HMDs (Head Mounted Displays) auch Hinweise zur sinnvollen Darstellung von Objekten veröffentlicht [3]. In letzter Zeit gibt es auch Ansätze, das GPS und die Orientierungssensorik modernerer Geräte zu nutzen ([1, 2, 4,5].
**[1] AR Wikitude. http://www.mobillzy.com/wikitude.php.**
**[2] Enkin. http://www.enkin.net.**
**[3]** S. Feiner, B. Macintyre, T. Hölierer, and A. Webster, A touring machine: Prototyping 3d mobile augmented reality systems for exploring the urban environment. In Proceedings of the 1st International Symposium on Wearable Computers, pages 74-81, 1997**.**
**[4] Sekal Camera, http://www.tonchidot.com/product-info.html,**
**[5] layar.com**

Die bisher veröffentlichten Ansätze haben jedoch den Nachteil, dass sie die einfache Einbeziehung anderer Nutzer in die AR-Szenen nicht ermöglichen. Desweiteren haben die meisten Systeme, die sich auf GPS und Kompass stützen, den Nachteil, dass diese Geräte zwingend zur Verfügung stehen müssen und hohe Ungenauigkeiten auftreten können.

In US 2009/0179895 A1 wird ein Verfahren zum Einblenden von dreidimensionalen Vermerken oder Notierungen in ein Bild einer realen Umgebung ("street view") beschrieben. Hierbei wird von einem Benutzer mittels einer Auswahlbox im Bild ausgewählt, an welcher Stelle ein Vermerk eingeblendet werden soll. Anschließend wird die Auswahlbox auf ein dreidimensionales Modell projiziert, um eine Position des Vermerks in Relation zu dem Bild zu ermitteln. Desweiteren werden Ortsdaten entsprechend der Projektion auf das dreidimensionale Modell ermittelt und dem vom Benutzer eingegebenen Vermerk zugeordnet. Der Vermerk wird zusammen mit den Ortsdaten in einer Datenbank eines Servers gespeichert und kann in einem anderen Bild der realen Umgebung entsprechend den Ortsdaten eingeblendet werden.

Als "Tagging" wird im Allgemeinen und im Folgenden die Anreicherung der Realität mit zusätzlichen Informationen durch einen Benutzer bezeichnet. Bisherige Ansätze zum Tagging beinhalten die Platzierung von Objekten auf Kartenansichten (z.B. Google Maps), das Fotografieren von Ortspunkten und das Speichern dieser Bilder mit zusätzlichen Kommentaren und das Erzeugen von Textnachrichten an bestimmten Ortspunkten. Nachteilig ist, dass entfernte Betrachter und Benutzer keinen AR-Zugang auf interaktive Szenen in der Welt mehr haben können. Lediglich sogenannte Screenshots (Bildschirmfotos) der AR-Szene können betrachtet, aber nicht mehr verändert werden.

KAR WEE CHIA ET AL, "Online 6 DOF Augmented Reality Registration from Natural Features", PROCEEDINGS: ISMAR 2002 offenbart ein System zur Verfolgung von Kameras mit sechs Freiheitsgraden, das auf natürlichen Merkmalen basiert, wobei aus einem eingehenden Bild und einem von zwei Referenzbildern Blickwinkelübereinstimmungen berechnet werden und die relative Kamerabewegung zwischen dem eingehenden Bild und einem der Referenzrahmen durch einen Algorithmus bestimmt, der die Grundmatrix zwischen den beiden Bildern berechnet und Rotations- und Übersetzungsparameter extrahiert. Anschließend wird eine nichtlineare Optimierung einer Two-View-Kostenfunktion durchgeführt.

THUONG N. HOANG ET AL, "Precise Manipulation at a Distance in Wearable Outdoor Augmented Reality" offenbart die präzise Manipulation und Modellierung von Interaktionen in der Augmented Reality ohne ein Bestimmen einer Pose eines Bildes. Es ist Aufgabe der vorliegenden Erfindung, ein Verfahren zur Darstellung von virtueller Information in einer Ansicht einer realen Umgebung anzugeben, das Nutzern erlaubt, mittels Augmented Reality von anderen Nutzern erstellte AR-Bild-Szenen interaktiv zu betrachten und dabei eine hohe Genauigkeit und Nutzerfreundlichkeit zu gewährleisten.

### Zusammenfassung der Erfindung

Die Erfindung wird durch die unabhängigen Ansprüche definiert.

In einem ersten Aspekt der Erfindung wird ein Verfahren zur Darstellung von virtueller Information in einer Ansicht einer realen Umgebung bereitgestellt, das die folgenden Schritte aufweist: Bereitstellen wenigstens eines virtuellen Objekts, das eine globale Position und Orientierung in Bezug auf ein geographisch globales Koordinatensystem besitzt, zusammen mit ersten Posedaten, die einen Rückschluss auf die globale Position und Orientierung des virtuellen Objekts zulassen, auf einer Datenbank eines Servers, Aufnahme wenigstens eines Bildes einer realen Umgebung mittels eines mobilen Gerätes und Bereitstellen von zweiten Posedaten, die einen Rückschluss darüber zulassen, an welcher Position und mit welcher Orientierung in Bezug auf das geographisch globale Koordinatensystem das Bild aufgenommen wurde, Darstellen des Bildes auf einem Display des mobilen Geräts, Zugriff auf das virtuelle Objekt auf der Datenbank des Servers und Positionieren des virtuellen Objekts in dem auf dem Display dargestellten Bild auf Grundlage der ersten und zweiten Posedaten, Manipulieren des virtuellen Objekts oder Hinzufügen eines weiteren virtuellen Objekts durch entsprechendes Positionieren in dem auf dem Display dargestellten Bild, und Bereitstellen des manipulierten virtuellen Objekts zusammen mit modifizierten ersten Posedaten entsprechend der Positionierung in dem Bild bzw. des weiteren virtuellen Objekts zusammen mit dritten Posedaten entsprechend der Positionierung in dem Bild auf der Datenbank des Servers, wobei die modifizierten ersten Posedaten und dritten Posedaten jeweils einen Rückschluss auf die globale Position und Orientierung des manipulierten bzw. weiteren virtuellen Objekts zulassen. Hierbei kann das Bild beispielsweise zusammen mit den zweiten Posedaten auf dem Server bereitgestellt werden.

In einem weiteren Aspekt der Erfindung wird ein Verfahren zur Darstellung von virtueller Information in einer Ansicht einer realen Umgebung bereitgestellt, das die folgenden Schritte aufweist: Bereitstellen wenigstens eines virtuellen Objekts, das eine globale Position und Orientierung in Bezug auf ein geographisch globales Koordinatensystem besitzt, zusammen mit ersten Posedaten, die einen Rückschluss auf die globale Position und Orientierung des virtuellen Objekts zulassen, auf einer Datenbank eines Servers, Bereitstellen wenigstens einer Ansicht auf eine reale Umgebung mittels einer Datenbrille (beispielsweise einer sogenannten Optical-See-Through-Datenbrille oder einer Video-See-Through-Datenbrille) zusammen mit zweiten Posedaten, die einen Rückschluss darüber zulassen, an welcher Position und mit welcher Orientierung in Bezug auf das geographisch globale Koordinatensystem die Datenbrille positioniert ist, Zugriff auf das virtuelle Objekt auf der Datenbank des Servers und Positionieren des virtuellen Objekts in der Ansicht auf Grundlage der ersten und zweiten Posedaten, Manipulieren des virtuellen Objekts oder Hinzufügen eines weiteren virtuellen Objekts durch entsprechendes Positionieren in der Ansicht, und Bereitstellen des manipulierten virtuellen Objekts zusammen mit modifizierten ersten Posedaten entsprechend der Positionierung in der Ansicht bzw. des weiteren virtuellen Objekts zusammen mit dritten Posedaten entsprechend der Positionierung in der Ansicht auf der Datenbank des Servers, wobei die modifizierten ersten Posedaten und dritten Posedaten jeweils einen Rückschluss auf die globale Position und Orientierung des manipulierten bzw. weiteren virtuellen Objekts zulassen.

In einer Ausführungsform der Erfindung weist das mobile Gerät bzw. die Datenbrille eine Einrichtung zur Generierung der zweiten Posedaten auf oder ist mit einer solchen verbunden.

Beispielsweise können die Posedaten jeweilige dreidimensionale Werte bezüglich Position und Orientierung beinhalten. Außerdem kann eine Orientierung des Bildes der realen Umgebung unabhängig von der Erdoberfläche definiert sein.

Gemäß einer weiteren Ausführungsform der Erfindung wird in einem Speicherort auf dem Server festgehalten, in welchem Bild von mehreren Bildern einer realen Umgebung bzw. in welcher Ansicht von mehreren Ansichten einer realen Umgebung welches virtuelle Objekt von mehreren virtuellen Objekten mit Posedaten versehen wurde.

Wird die Position des mobilen Geräts beispielsweise mittels eines GPS-Sensors (GPS: Global Positioning System) bestimmt, kann es aufgrund einer Sensor-Ungenauigkeit bzw. einer GPS-immanenten Ungenauigkeit vorkommen, dass die Position des mobilen Geräts nur relativ ungenau bestimmt wird. Dies kann zur Folge haben, dass eingeblendete virtuelle Objekte im Bild relativ zum geographisch globalen Koordinatensystem ebenfalls mit einer entsprechenden Ungenauigkeit positioniert werden, so dass in anderen Bildern oder Ansichten mit verschiedenem Blickwinkel die dort eingeblendeten virtuellen Objekte entsprechend deplatziert in Bezug zur Realität dargestellt werden.

Um die Genauigkeit der Darstellung von virtuellen Objekten bzw. deren Position in dem Bild der realen Umgebung zu verbessern, beinhaltet eine Ausführungsform des erfindungsgemäßen Verfahrens die folgenden Schritte: Bereitstellen einer Referenz-Datenbank mit Referenz-Ansichten auf eine reale Umgebung zusammen mit Posedaten, die einen Rückschluss darüber zulassen, an welcher Position und mit welcher Orientierung in Bezug auf das geographisch globale Koordinatensystem die jeweilige Referenz-Ansicht von einer Kamera aufgenommen wurde, Vergleich wenigstens eines realen Objekts, das in dem Bild abgebildet ist, mit wenigstens einem Teil eines realen Objekts, das in wenigstens einer der Referenz-Ansichten enthalten ist, und Abgleich der zweiten Posedaten des Bildes mit den Posedaten der wenigstens einen Referenz-Ansicht, und Modifizieren wenigstens eines Teils der zweiten Posedaten auf Grundlage wenigstens eines Teils der Posedaten der wenigstens einen Referenz-Ansicht infolge des Abgleichs.

In einer weiteren Ausführungsform wird außerdem wenigstens ein Teil der ersten Posedaten des im Bild positionierten virtuellen Objekts infolge eines Abgleichs der zweiten Posedaten des Bildes mit den Posedaten der wenigstens einen Referenz-Ansicht modifiziert.

Weitere Ausgestaltungen und Ausführungsformen der Erfindung sind in den Unteransprüchen angegeben.

Aspekte und Ausführungsformen der Erfindung werden im Folgenden anhand der dargestellten Figuren näher erläutert.

### Kurze Beschreibung der Zeichnungen

- Fig. 1A: zeigt in einer Draufsicht eine schematische Anordnung einer ersten beispielhaften Ausführungsform eines Systemaufbaus, der verwendbar ist, um ein Verfahren gemäß der Erfindung durchzuführen,
- Fig. 1B: zeigt in einer Draufsicht eine schematische Anordnung einer zweiten beispielhaften Ausführungsform eines Systemaufbaus, der verwendbar ist, um ein Verfahren gemäß der Erfindung durchzuführen,
- Fig. 1C: zeigt in einer Schemaanordnung eine mögliche Datenstruktur einer Ausführungsform eines Systems, um ein Verfahren gemäß der Erfindung durchzuführen,
- Fig. 2: zeigt in einer schematischen Darstellung eine Übersicht von beteiligten Koordinatensystemen gemäß einer Ausführungsform der Erfindung,
- Fig. 3: zeigt einen beispielhaften Ablauf eines Verfahrens gemäß einer Ausführungsform der Erfindung,
- Fig. 4: zeigt einen beispielhaften Ablauf eines Verfahrens gemäß einer weiteren Ausführungsform der Erfindung, insbesondere ergänzt durch optionale Maßnahmen zur Verbesserung der Bildpose,
- Fig. 5: zeigt eine beispielhafte Szene einer realen Umgebung mit darin platzierten virtuellen Objekten, ohne dass eine Posenverbesserung stattgefunden hat,
- Fig. 6: zeigt eine beispielhafte Szene einer realen Umgebung mit darin platzierten virtuellen Objekten, nachdem eine Posenverbesserung stattgefunden hat.
- Fig. 7A: zeigt eine beispielhafte Kartenansicht der realen Welt, auf der ein virtuelles Objekt platziert wurde,
- Fig. 7B: zeigt eine beispielhafte perspektivische Ansicht der gleichen Szene wie in Fig. 7A.

### Beschreibung von Ausführungsformen der Erfindung

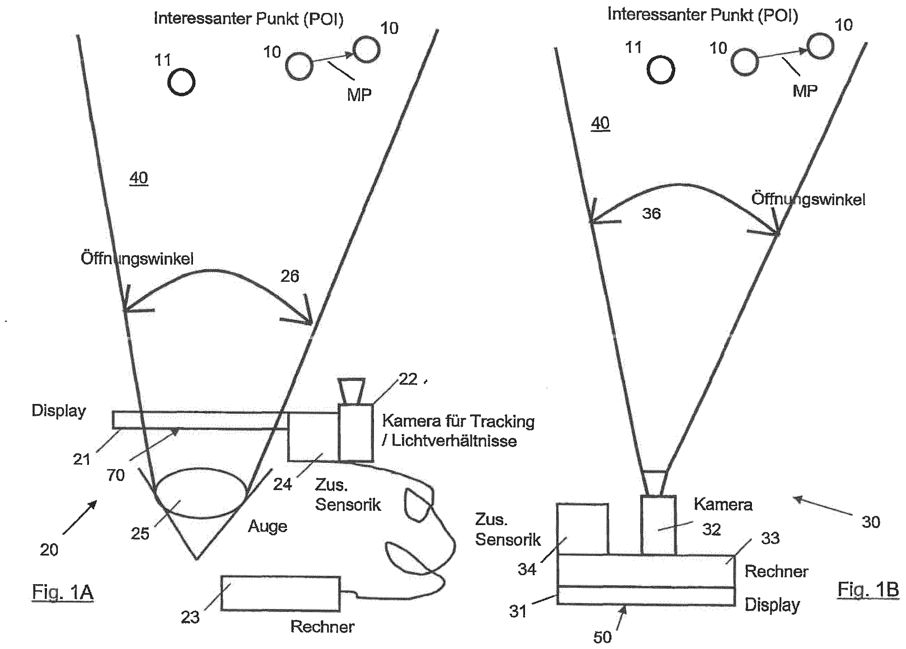

Fig. 1A zeigt in einer Draufsicht eine schematische Anordnung einer ersten beispielhaften Ausführungsform eines Systemaufbaus, der verwendbar ist, um ein Verfahren gemäß der Erfindung durchzuführen.

In der Darstellung der Fig. 1A trägt der Benutzer als Darstellungsvorrichtung ein kopfgetragenes Bildschirmsystem ("Head Mounted Display", kurz HMD) mit einem Display 21, welches Teil des Systemaufbaus 20 ist. Zumindest Teile des Systemaufbaus 20 können als ein mobiles Gerät angesehen werden, das ein oder mehrere miteinander verbundene Komponenten umfasst, wie im Folgenden noch näher erläutert. Die Komponenten können dabei durch Drahtverbindungen und/oder auch drahtlos miteinander verbunden sein. Auch ist es möglich, dass einzelne der Komponenten, wie etwa der Rechner 23, als stationäre Komponenten ausgebildet sind, sich also mit dem Benutzer nicht mitbewegen. Das Display 21 kann beispielsweise eine allgemein bekannte Datenbrille in Form einer sogenannten Optical-See-Through-Datenbrille ("Optical-See-Through-Display", bei dem die Realität durch die Halbdurchlässigkeit der Datenbrille sichtbar ist) oder in Form einer sogenannten Video-See-Through-Datenbrille ("Video-See-Through-Display", bei dem die Realität auf einem vor dem Kopf des Benutzers getragenen Bildschirm wiedergeben wird) sein, in die virtuelle Information, bereitgestellt von einem Rechner 23, in bekannter Weise eingeblendet werden kann. Der Benutzer sieht dann in einer durch das Display 21 bzw. auf dem Display 21 sichtbaren Ansicht 70 auf die reale Welt innerhalb eines Blickwinkels oder Öffnungswinkels 26 Objekte der realen Umgebung 40, die mit eingeblendeter virtueller Information 10 (wie etwa sogenannten Point-of-Interest-Objekten, kurz POI-Objekten, die mit der realen Welt in Beziehung stehen) angereichert werden kann. Das virtuelle Objekt 10 wird derart eingeblendet, dass der Benutzer dieses in einer Weise wahrnimmt, als ob es in der realen Umgebung 40 an einer ungefähren Position angeordnet wäre. Diese Position des virtuellen Objekts 10 kann auch als globale Position in Bezug auf ein geographisch globales Koordinatensystem, wie einem Erd-Koordinatensystem, gespeichert werden, wie im Folgenden noch näher erläutert. Auf diese Art bildet der Systemaufbau 20 eine erste Ausführungsform eines allgemein bekannten Augmented Reality Systems, welches für das Verfahren der vorliegenden Erfindung verwendet werden kann.

An dem Display 21 können zusätzliche Sensoren 24, wie Rotationssensoren, GPS-Sensoren oder Ultraschallsensoren, und eine Kamera 22 für optisches Tracking und die Aufnahme von einem oder mehreren Bildern (sogenannte "Views") befestigt sein. Das Display 21 kann halbdurchlässig sein oder durch ein Kamerabild der Kamera 22 mit Bildem der Realität gespeist werden. Ist das Display 21 halbdurchlässig, ist eine Kalibrierung zwischen Auge 25 des Benutzers und Display 21 nötig. Dieses als Seethrough-Kalibrierung bezeichnete Verfahren ist dem Fachmann bekannt. Diese Kalibrierung kann vorteilhafterweise gleichzeitig die Pose von Auge zur Kamera 22 bestimmen, Die Kamera kann zur Aufnahme von Views eingesetzt werden, um sie für andere Nutzer zugänglich zu machen, wie im Weiteren noch näher erläutert. Als Pose wird allgemein die Position und Orientierung eines Objekts oder Gegenstands in Relation auf ein Bezugskoordinatensystem verstanden. Zur Posenbestimmung sind im Stand der Technik verschiedene Verfahren dokumentiert und dem Fachmann bekannt. Vorteilhafterweise am Display 21 oder irgendwo am Körper des Benutzers, oder auch in dem Rechner 23 können Positionssensoren verbaut sein, wie zum Beispiel GPS-Sensoren (GPS: Global Positioning System), um eine geographische Ortsbestimmung des Systemaufbaus 20 (z.B. nach Längen- und Breitengrad und Höhe) in der realen Welt 40 zu ermöglichen. Grundsätzlich ist die Posenbestimmung eines jeden Teils des Systemaufbaus geeignet, sofern Rückschlüsse über die Position und Blickrichtung des Benutzers getroffen werden können.

In der Darstellung der Fig. 1B ist ein weiterer beispielhafter Systemaufbau 30 gezeigt, der z.B. in modernen Mobiltelefonen (sog. "Smartphones") häufig zu finden ist. Eine Darstellungsvorrichtung 31 (z.B. in Form eines Bildschirms bzw. Displays), Rechner 33, Sensoren 34 und Kamera 32 bilden eine Systemeinheit, die etwa in einem gemeinsamen Gehäuse eines Mobiltelefons untergebracht ist. Zumindest Teile des Systemaufbaus 30 können als ein mobiles Gerät angesehen werden, das ein oder mehrere der genannten Komponenten umfasst. Die Komponenten können dabei in einem gemeinsamen Gehäuse oder (teilweise) verteilt angeordnet sein, und durch Drahtverbindungen und/oder auch drahtlos miteinander verbunden sein.

Die Ansicht auf die reale Umgebung 40 wird durch das Display 31 bereitgestellt, welches ein Bild 50 der realen Umgebung 40 darstellt, das von der Kamera 32 in einem Blickwinkel und mit einem Öffnungswinkel 36 aufgenommen wurde. Für Augmented Reality Anwendungen wird das Kamerabild 50 auf dem Display 31 dargestellt und mit zusätzlichen virtuellen Informationen 10 (wie etwa POI-Objekten, die mit der realen Welt in Beziehung stehen), die eine bestimmte Position in Bezug zur Realität besitzen, angereichert werden, ähnlich wie in Bezug auf Figur 1A beschrieben. Auf diese Art bildet der Systemaufbau 30 eine weitere Ausführungsform eines allgemein bekannten Augmented Realtity (AR) Systems.

Es wird eine ähnliche Kalibrierung eingesetzt, wie in Bezug auf Figur 1A beschrieben, um die Pose von virtuellen Objekten 10 bezüglich der Kamera 32 zu bestimmen, um sie für andere Nutzer zugänglich zu machen, wie im Weiteren noch näher erläutert. Zur Posenbestimmung sind im Stand der Technik verschiedene Verfahren dokumentiert und dem Fachmann bekannt. Vorteilhafterweise am mobilen Gerät (insbesondere, wenn der Systemaufbau 30 als eine Einheit ausgebildet ist) oder irgendwo am Körper des Benutzers, oder auch in dem Rechner 33 können Positionssensoren verbaut sein, wie zum Beispiel GPS-Sensoren 34, um eine geographische Ortsbestimmung des Systemaufbaus 30 (z.B. nach Längen- und Breitengrad) in der realen Welt 40 zu ermöglichen. In bestimmten Fällen ist für die Posenbestimmung keine Kamera nötig, wenn zum Beispiel die Pose nur über GPS und Orientierungssensoren bestimmt wird. Grundsätzlich ist die Posenbestimmung eines jeden Teils des Systemaufbaus geeignet, sofern Rückschlüsse über die Position und Blickrichtung des Benutzers getroffen werden können.

Grundsätzlich kann die Erfindung für alle Ausprägungen von AR sinnvoll eingesetzt werden. Zum Beispiel spielt es keine Rolle, ob die Darstellung im sogenannten Optical-See-Through-Verfahren mit halbdurchlässigem HMD oder im Video-See-Through-Verfahren mit Kamera und Bildschirm durchgeführt wird.

Grundsätzlich kann die Erfindung auch im Zusammenhang mit stereoskopischen Displays eingesetzt werden, wobei vorteilhafterweise beim Video-See-Through-Ansatz zwei Kameras jeweils einen Videostrom für ein Auge aufnehmen. Auf jeden Fall können die virtuellen Informationen für jedes Auge individuell gerechnet werden und als Paar auch auf dem Server gespeichert werden.

Die Abarbeitung der unterschiedlichen, im folgenden beschriebenen Teilschritte kann grundsätzlich auf verschiedene Rechner über Netzwerk verteilt werden. Es ist also eine Client/Server- Architektur oder eine eher Client-basierte Lösung möglich. Des weiteren kann der Client oder der Server auch mehrere Recheneinheiten, wie mehrere CPUs oder spezialisierte Hardwarekomponenten, wie allgemein bekannte FPGAs, ASICs, GPUs oder DSPs beinhalten.

Um AR realisieren zu können, wird die Pose (Position und Orientierung) der Kamera im Raum benötigt. Dies kann auf unterschiedlichste Weise realisiert werden. Man kann z.B. nur mit GPS und einem Orientierungssensor mit elektronischem Kompass (wie zum Beispiel in manchen moderneren Mobiltelefonen verbaut) die Pose in der realen Welt ermitteln. Allerdings ist die Unsicherheit der Pose dann sehr hoch. Daher können auch andere Verfahren, wie zum Beispiel optische Initialisierung und Tracking oder die Kombination optischer Verfahren mit GPS und Orientierungssensoren eingesetzt werden. Es kann auch WLAN-Ortung eingesetzt werden, oder RFIDs (Marker oder Chips für "Radio Frequency Identification") oder optische Marker können die Lokalisierung unterstützen. Auch hier ist, wie schon erwähnt, ein Client-Server-basierter Ansatz möglich. Insbesondere kann der Client ortsspezifische Informationen, die er für optisches Tracking benötigt, vom Server anfordern. Dies können zum Beispiel Referenzbilder der Umgebung mit Poseinformationen und Tiefeninformationen sein. Eine optionale Ausführungsform dieser Erfindung sieht dabei insbesondere die Möglichkeit vor, auf dem Server die Pose eines Views zu verbessern und auf Basis dieser Informationen die Pose der platzierten virtuellen Objekte in der Welt ebenfalls zu verbessern.

Desweiteren kann die Erfindung auch in Fahrzeugen, Luftfahrzeugen oder Schiffen unter Benutzung eines Monitors, HMDs oder eines Head-Up-Displays verbaut oder mitgeführt werden.

Grundsätzlich können virtuelle Objekte, wie etwa ein interessanter Punkt ("Point of Interest", POI), für unterschiedlichste Informationsformen erstellt werden. Es folgen Beispiele: Es können Bilder von Orten mit GPS-Informationen dargestellt werden. Es können Informationen aus dem Internet automatisch extrahiert werden. Dies können zum Beispiel Firmen- oder Restaurant-Websites mit Adressen sein oder Seiten, auf denen Bewertungen vorgenommen werden. Es können Nutzer Texte, Bilder oder 3D-Objekte an bestimmten Orten hinterlegen und anderen zugänglich machen. Es können Informationsseiten, wie zum Beispiel Wikipedia, nach Geoinformationen durchsucht werden und die Seiten als POI zugänglich gemacht werden. Es können POIs automatisch aus dem Such- oder Browse-Verhalten der Nutzer mobiler Geräte erzeugt werden. Es können andere interessante Orte, wie U-Bahnen oder Busstationen, Krankenhäuser, Polizeistationen, Ärzte, Immobilienanzeigen oder Fitnessclubs dargestellt werden.

Solche Informationen können in dem Bild 50 oder in der Ansicht 70 (vgl. Figuren 1A und 1B) als virtuelle Objekte 10 an bestimmten Orten in der realen Welt 40 von einem Benutzer hinterlegt und mit der dem jeweiligen Ort entsprechenden Position anderen zugänglich gemacht werden. Die anderen Nutzer können dann in einer ihnen zugänglichen Ansicht oder einem Bild der realen Welt diese ihrer Position entsprechend eingeblendete Information dann beispielsweise manipulieren oder auch weitere virtuelle Objekte hinzufügen. Dies wird im Folgenden näher erläutert.

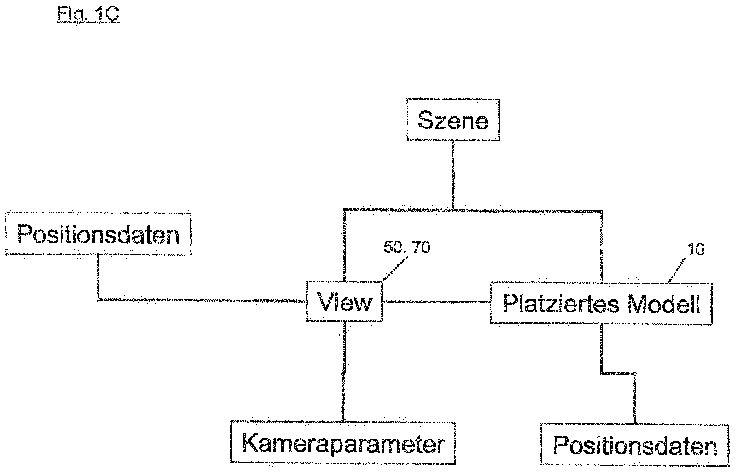

Zunächst zeigt Figur 1C Datenstrukturen, die gemäß einer Ausführungsform der Erfindung verwendet werden und im Folgenden kurz erläutert werden.

Ein View ist eine festgehaltene Sicht auf die reale Welt, insbesondere eine Ansicht (vgl. Ansicht 70 gemäß Figur 1A), ein Bild (vgl. Bild 50 gemäß Figur 1B) oder eine Bildfolge (ein Film). Mit dem View (Bild 50/Ansicht 70) sind Kameraparameter verknüpft, die optische Eigenschaften der Kamera 22, 32 beschreiben (zum Beispiel bezüglich Öffnungswinkel, Hauptpunktverschiebung oder Bildverzerrung) und dem Bild 50 bzw. der Ansicht 70 zuzuordnen sind. Ebenso sind dem View auch Posedaten zugeordnet, welche die Position und Orientierung des Bildes 50 bzw. der Ansicht 70 in Bezug zur Erde beschreiben. Der Erde wird hierzu ein geographisch globales Koordinatensystem zugeordnet, um eine geographisch globale Ortsbestimmung in der realen Welt, z.B. nach Längen- und Breitengrad, zu ermöglichen.

Ein platziertes Modell ist ein grafisch darstellbares virtuelles Objekt (vgl. Objekt 10 gemäß Figuren 1A, 1B), welches ebenfalls Posedaten hat. Das platzierte Modell kann beispielsweise eine Instanz eines Modells aus einer Modelldatenbank darstellen, also auf diese verweisen. Es ist vorteilhafterweise hinterlegt, mittels welchen Views 50 bzw. 70 das jeweilige virtuelle Modell 10 in der Welt 40 platziert wurde, falls dies der Fall ist. Dies kann zur Verbesserung der Posedaten verwendet werden, wie im Folgenden noch näher erläutert. Eine Szene stellt eine Verknüpfung aus einem View 50, 70 mit 0 bis n platzierten Modellen 10 dar und enthält optional ein Erstellungsdatum. Alle oder ein Teil der Datenstrukturen können noch mit Metadaten verknüpft sein. Zum Beispiel können der Ersteller, das Datum, die Häufigkeit der Bilder/Ansichten, Ratings und Schlüsselworte abgelegt werden.

Im Folgenden werden Aspekte der Erfindung in Bezug auf die Ausführungsform gemäß Figur 1B näher erläutert, in welcher ein Bild 50 von einer Kamera 32 aufgenommen wird und von dem Benutzer auf dem Display 31 zusammen mit eingeblendeten virtuellen Objekten 10 betrachtet wird. Die diesbezüglichen Ausführungen sind vom Fachmann jedoch ohne weiteres analog auch auf die Ausführungsform mit HMD gemäß Figur 1A übertragbar.

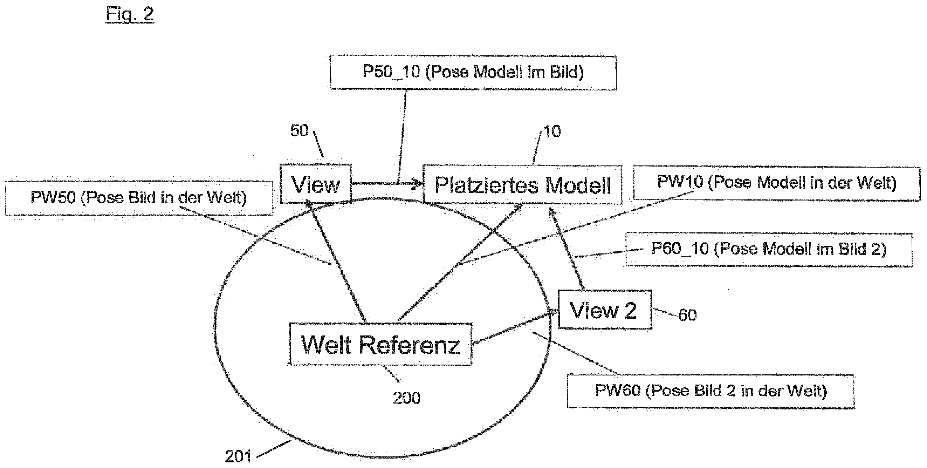

Figur 2 gibt einen Überblick über beteiligte Koordinatensysteme gemäß einer Ausführungsform der Erfindung. Einerseits wird ein Erd-Koordinatensystem 200 verwendet (welches in dieser Ausführungsform das geographisch globale Koordinatensystem repräsentiert), das ein Verbindungselement darstellt. Die Erdoberfläche ist in Figur 2 mit Bezugszeichen 201 angedeutet. Zur Definition eines geographisch globalen Koordinatensystems, wie einem Erd-Koordinatensystem 200, sind verschiedene Standards definiert, die dem Fachmann bekannt sind (z.B. WGS84; NIMA - National Imagery and Mapping Agency: Department of Defense World Geodetic System 1984; Technical Report, TR 8350.2, 3rd edition; January 2000). Des weiteren stellt ein Kamerakoordinatensystem eine Verbindung zwischen dargestellten virtuellen Objekten 10 und Bildern 50 dar. Über dem Fachmann bekannte Umrechnungen kann aus den Posen von Kamera 32 und Bild 50 im Erd-Koordinatensystem 200 die Pose P50_10 ("Pose Modell im Bild") eines Objekts 10 relativ zum Bild 50 berechnet werden. Die globale Bildpose PW50 ("Pose Bild in der Welt") wird z.B. über GPS- und/oder Orientierungssensoren berechnet. Aus den Posen PW50 und P50_10 kann dann die globale Pose PW10 des virtuellen Objekts 10 ("Pose Modell in der Welt") berechnet werden.

In analoger Weise kann aus der Pose eines zweiten Bildes 60 mit einer anderen globalen Pose PW60 im Erd-Koordinatensystem 200 die Pose P60_10 ("Pose Modell im Bild 2") des Objekts 10 relativ zum Bild 60 berechnet werden. Die globale Bildpose PW60 ("Pose Bild 2 in der Welt") wird z.B. auch über GPS- und/oder Orientierungssensoren berechnet.

Auf diese Art ist es möglich, ein virtuelles Objekt 10 in einem ersten Bild (Bild 50) zu platzieren und in einem zweiten Bild (Bild 60) an einer in der Nähe liegenden Position auf der Erde, jedoch aus einem anderen Blickwinkel, zu betrachten. Das Objekt 10 wird beispielsweise von einem ersten Benutzer in dem ersten Bild 50 mit der Pose PW10 platziert. Wenn dann ein zweiter Benutzer mit seinem mobilen Gerät eine Ansicht gemäß Bild 60 generiert, wird ihm automatisch das vom ersten Benutzer platzierte virtuelle Objekt 10 in dem Bild 60 an der gleichen globalen Position entsprechend der Pose PW10 eingeblendet, vorausgesetzt, das Bild 60 erfasst in einem Öffnungswinkel oder Blickwinkel einen Teil der realen Welt, der die globale Position der Pose PW10 beinhaltet.

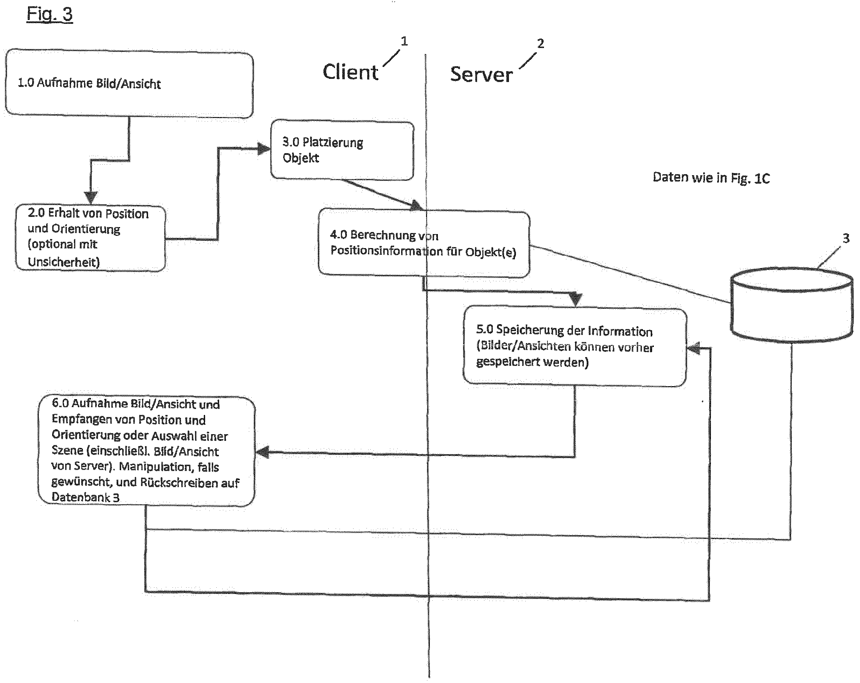

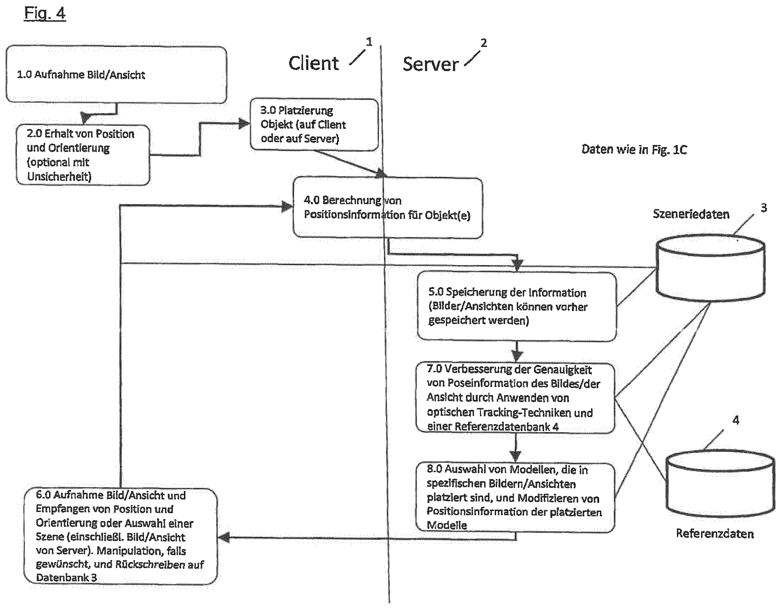

Im Folgenden werden Aspekte und Ausführungsformen der Erfindung anhand der Ablaufdiagramme der Figuren 3 und 4 in Verbindung mit den übrigen Figuren näher erläutert.

Figur 3 zeigt einen beispielhaften Ablauf eines Verfahrens gemäß einer Ausführungsform der Erfindung. In einem ersten Schritt 1.0 werden auf die Welt bezogene Daten erzeugt. Diese können zum Beispiel aus dem Internet extrahiert werden oder von einem ersten Benutzer mittels einer Kamera (Fig. 1B) oder einem HMD mit Kamera (Fig. 1A) erzeugt werden. Dazu nimmt dieser in Schritt 1.0 einen View (Bild oder Ansicht) auf, zu dem Position und Orientierung (Pose) in der Welt ermittelt werden (Schritt 2.0). Dies kann zum Beispiel mittels GPS und Kompass geschehen. Optional kann auch noch eine Information bezüglich Unsicherheit der generierten Daten aufgenommen werden.

Ist der View (das Bild bzw. die Ansicht) vorhanden, kann der Benutzer vorteilhafterweise direkt auf seinem mobilen Gerät ein virtuelles Objekt im View platzieren (Schritt 3.0). Vorteilhafterweise wird das Objekt im Kamerakoordinatensystem platziert und manipuliert. In diesem Fall wird in Schritt 4.0 aus der globalen Pose des Views und der Pose des Objekts im Kamerakoordinatensystem die globale Pose des virtuellen Objekts (oder der Objekte) in der Welt (z.B. in Bezug auf Koordinatensystem 200) berechnet. Dies kann auf einem Client 1 geschehen oder auf einem Server 2 erfolgen.

Ein Client ist dabei ein Programm auf einem Gerät, das Kontakt zu einem anderen Programm auf einem Server aufnimmt, um dessen Dienstleistung zu nutzen. Das zugrundeliegende Client-Server-Modell ermöglicht, Aufgaben auf verschiedene Rechner in einem Rechnernetz zu verteilen. Ein Client löst eine oder mehrere bestimmte Aufgaben nicht selbst, sondern lässt sie vom Server erledigen bzw. erhält entsprechende Daten vom Server, der dafür einen Dienst anbietet. Grundsätzlich können die meisten Schritte dieses Systems entweder auf dem Server oder dem Client durchgeführt werden. Bei rechenstarken Clients ist es zum Beispiel von Vorteil, diese möglichst viele Berechnungen durchführen zu lassen und so den Server zu entlasten.

In Schritt 5.0 werden diese Informationen aus Schritt 4.0 dann in einer Datenbank 3 des Servers 2 abgespeichert, vorteilhafterweise wie in Bezug auf Figur 1C beschrieben. In Schritt 6.0 nimmt nun derselbe Nutzer oder ein weiterer Nutzer auf einem weiteren Client ein Bild der realen Umgebung auf (oder betrachtet einen bestimmten Teil der Umgebung mittels eines HMDs) und lädt dann Daten, die in Schritt 5.0 gespeichert wurden, bezüglich eines Ortes der betrachteten realen Umgebung vom Server 2. Das Laden und die Anzeige ortsbezogener Informationen mittels Augmented Reality und einer vorteilhafterweise mit Geospatial-Funktionalitäten ausgestatteten Datenbank ist dem Fachmann bekannt. Der Nutzer sieht nun die zuvor gespeicherten Informationen aus dem zuvor gespeicherten oder einem neuen Blickwinkel und ist in der Lage Veränderungen (Manipulationen von bestehenden und/oder Hinzufügen von neuen virtuellen Informationen) vorzunehmen, welche wiederum auf dem Server 2 gespeichert werden. Dabei muss der Nutzer nicht unbedingt vor Ort sein, sondern kann den zuvor, vorteilhafterweise abgespeicherten View als Fenster auf die Realität nutzen und dabei in seinem Büro zum Beispiel an einem Internet-fähigen Client sitzen.

Im Beispiel der Figuren 1 und 2 wird also auf diese Art von einem Nutzer ein virtuelles Objekt 10 auf der Datenbank 3 des Servers 2 bereitgestellt oder generiert, das eine globale Position und Orientierung in Bezug auf ein geographisch globales Koordinatensystem 200 besitzt, zusammen mit den Posedaten (Pose PW10), die einen Rückschluss auf die globale Position und Orientierung des virtuellen Objekts 10 zulassen. Dieser Nutzer oder ein anderer Nutzer nimmt wenigstens ein Bild 50 einer realen Umgebung 40 mittels eines mobilen Gerätes 30 auf zusammen mit den Posedaten (Pose PW50), die einen Rückschluss darüber zulassen, an welcher Position und mit welcher Orientierung in Bezug auf das geographisch globale Koordinatensystem 200 das Bild 50 aufgenommen wurde. Das Bild 50 wird dabei auf dem Display 31 des mobilen Geräts dargestellt. Es erfolgt ein Zugriff auf das virtuelle Objekt 10 auf der Datenbank 3 des Servers, und das virtuelle Objekt 10 wird in dem auf dem Display dargestellten Bild 50 auf Grundlage der Posedaten der Posen PW10 und PW50 positioniert. Das virtuelle Objekt 10 kann dann durch entsprechendes Positionieren (vgl. Pfeil MP in Fig. 1B) in dem auf dem Display dargestellten Bild 50 manipuliert werden (z.B. verschoben werden), oder es kann ein weiteres virtuelles Objekt 11 durch entsprechendes Positionieren in dem auf dem Display dargestellten Bild 50 hinzugefügt werden.

Ein solches manipuliertes virtuelles Objekt 10 zusammen mit den modifizierten Posedaten (modifizierte Pose PW10) entsprechend der Positionierung in dem Bild 50 bzw. ein solches weiteres virtuelles Objekt 11 zusammen mit seinen Posedaten entsprechend der Positionierung in dem Bild 50 wird dann auf der Datenbank 3 des Servers 2 gespeichert, wobei die modifizierten Posedaten PW10 und die Posedaten des neuen virtuellen Objekts 11 jeweils einen Rückschluss auf die globale Position und Orientierung des manipulierten Objekts 10 bzw. weiteren virtuellen Objekts 11 in Bezug zum Koordinatensystem 200 zulassen.

In bestimmten Fällen kann es vorkommen, dass der Server nicht erreichbar ist und damit zum Beispiel das Speichern der neuen Szene nicht möglich ist. In diesem Falle kann vorteilhafterweise das System reagieren und die Informationen zwischenspeichern, bis der Server wieder erreichbar ist. In einer Ausführungsform werden im Falle des Ausfalls der Netzwerkverbindung zum Server die auf dem Server zu speichernden Daten auf dem mobilen Gerät zwischengespeichert und zum Server übertragen, sobald die Netzwerkverbindung wieder zur Verfügung steht.

In einer weiteren Ausführungsform kann der Benutzer eine Sammlung von Szenen in einem Bereich einer realen Umgebung (z.B. in seinem Umgebungsbereich oder Nahbereich) abrufen, die sortiert nach Nähe in einer Liste, oder auf einer Karte oder mittels Augmented Reality ihm zur Auswahl bereitgestellt werden.

In einer weiteren Ausführungsform besitzt das Bild oder die virtuelle Information eindeutig identifizierende Eigenschaften (zum Beispiel eindeutige Namen), und ein Bild oder eine virtuelle Information, welche bereits auf einem Client oder auf dem mobilen Gerät vorhanden sind (dies können virtuelle Modelldaten oder Views sein), werden nicht mehr vom Server heruntergeladen, sondern werden aus einem lokalen Datenspeicher geladen .

Figur 4 zeigt einen beispielhaften Ablauf eines Verfahrens gemäß einer weiteren Ausführungsform der Erfindung, insbesondere ergänzt durch optionale Maßnahmen zur Verbesserung der Bildpose. Das Verfahren weist die Schritte 1.0 bis 6.0 der Figur 3 auf. Zusätzlich wird gemäß Figur 4 in den Schritten 7.0 und 8.0 die Pose des Views (Bild oder Ansicht) nachträglich, zum Beispiel mittels optischer Verfahren, verbessert und durch die vorteilhafte Speicherung der Information, mittels welches Views welche virtuellen Informationen platziert wurden, die Pose der Informationen ebenfalls korrigiert. Alternativ kann die Pose des Views sofort nach der Erstellung des Views schon auf dem Client 1 verbessert werden, indem optische Tracking-Referenzinformationen zu diesem View oder einem View mit einer ähnlichen Pose dem Client 1 von einer Referenzdatenbank 4 des Servers 2 zur Verfügung gestellt werden. Alternativ kann die Genauigkeit des Views aber auch vor dem Berechnen der Pose der platzierten virtuellen Objekte (Schritt 4.0) erfolgen und direkt richtig abgespeichert werden. Vorteil des nachträglichen Verfahrens ist allerdings, dass nicht schon für alle Orte Referenzdaten verfügbar sein müssen und eine Korrektur so auch für solche Views durchgeführt werden kann, sobald Referenzdaten zur Verfügung stehen.

Natürlich können auch andere Views als Referenzdaten genutzt werden, insbesondere wenn viele Views für einen Ort vorhanden sind. Dies als Bundle-Adjustment bezeichnete Verfahren ist dem Fachmann bekannt, wie zum Beispiel in der Veröffentlichung von MA-NOLIS I. A. LOURAKIS and ANTONIS A. ARGYROS : SBA: A Software Package for Generic Sparse Bundle Adjustment. In ACM Transactions on Mathematical Software, Vol. 36, No. 1, Article 2, Publication date: March 2009 beschrieben. In diesem Falle wären die 3D-Position der Punktkorrespondenzen, die Pose der Views und vorteilhafterweise auch die intrinsichen Kameraparameter optimierbar. Damit bietet der erfindungsgemäße Ansatz auch die Möglichkeit, ein eigenes Modell der Welt zu kreieren, um diese Daten allgemein zu nutzen. Zum Beispiel für Verdeckungsmodelle zur Unterstützung der Tiefenwahrnehmung oder für optisches Tracking in Echtzeit.

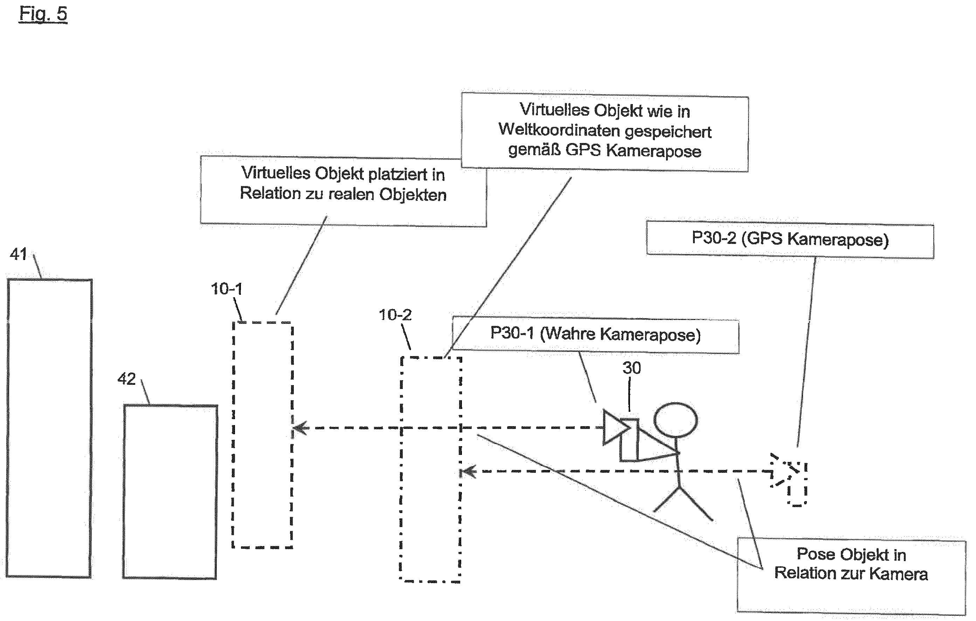

Figur 5 zeigt eine beispielhafte Szene einer realen Umgebung mit darin platzierten virtuellen Objekten, ohne dass bisher eine Posenverbesserung stattgefunden hat. Figur 5 zeigt dabei eine mögliche Situation vor einer Korrektur. Ein virtuelles Objekt 10 (zum Beispiel eine Bewertung eines Restaurants) wird aus einer Sicht eines mobilen Geräts 30 in einem auf dem Display 31 des Geräts 30 dargestellten Bild relativ zu realen Objekten 41, 42 (die z.B, das Gebäude des Restaurants repräsentieren) platziert. Auf Basis von fehlerhaften oder ungenauen GPS-Daten werden sowohl Bild als auch das Objekt 10 mit fehlerhaften Weltkoordinaten entsprechend fehlerhaft oder ungenau bestimmter Kamera-Posedaten P30-2 abgespeichert. Dies führt zu einem entsprechend fehlerhaft abgespeichertem Objekt 10-2. Dies ist in diesem aufgenommenen Bild an sich kein Problem. Der Fehler tritt aber zu Tage, wenn das virtuelle Objekt 10 zum Beispiel auf einer Karte oder in einem anderen Bild betrachtet wird.

Wenn das Bild zusammen mit wahren bzw. genauen Kamera-Posedaten P30-1 generiert worden wäre, würde das virtuelle Objekt 10 an einer Position im Bild dargestellt werden, wie anhand der Darstellung des virtuellen Objekts 10-1 gezeigt und vom generierenden Nutzer auch so betrachtet, Das fehlerhaft gespeicherte virtuelle Objekt 10-2 wird jedoch in einem anderen Bild als von der wahren Position des virtuellen Objekts 10 verschoben dargestellt, und zwar entsprechend um ein Maß, um das die fehlerhafte Kamerapose P30-2 von der wahren Kamerapose P30-1 verschoben ist. Die Darstellung des fehlerhaft abgespeicherten virtuellen Objekts 10-2 im Bild des mobilen Geräts 30 entspricht also nicht der wahren Positionierung durch den generierenden Nutzer in einem vorherigen Bild.

Um die Genauigkeit der Darstellung von virtuellen Objekten bzw. deren Position in dem Bild der realen Umgebung zu verbessern, beinhaltet eine Ausführungsform des erfindungsgemäßen Verfahren die folgenden Schritte: Es wird eine Referenzdatenbank 4 mit Referenz-Ansichten auf eine reale Umgebung zusammen mit Posedaten bereitgestellt, die einen Rückschluss darüber zulassen, an welcher Position und mit welcher Orientierung in Bezug auf das geographisch globale Koordinatensystem 200 die jeweilige Referenz-Ansicht von einer Kamera aufgenommen wurde. Es wird dann wenigstens ein Teil eines realen Objekts, das in dem Bild abgebildet ist, mit wenigstens einem Teil eines realen Objekts, das in wenigstens einer der Referenz-Ansichten enthalten ist, verglichen und ein Abgleich der Posedaten des Bildes mit den Posedaten der wenigstens einen Referenz-Ansicht vorgenommen. Danach wird wenigstens ein Teil der Posedaten des Bildes auf Grundlage wenigstens eines Teils der Posedaten der betreffenden Referenz-Ansicht infolge des Abgleichs modifiziert.

In einer weiteren Ausführungsform wird außerdem wenigstens ein Teil der Posedaten des im Bild positionierten virtuellen Objekts infolge eines Abgleichs der Posedaten des Bildes mit den Posedaten der betreffenden Referenz-Ansicht modifiziert.

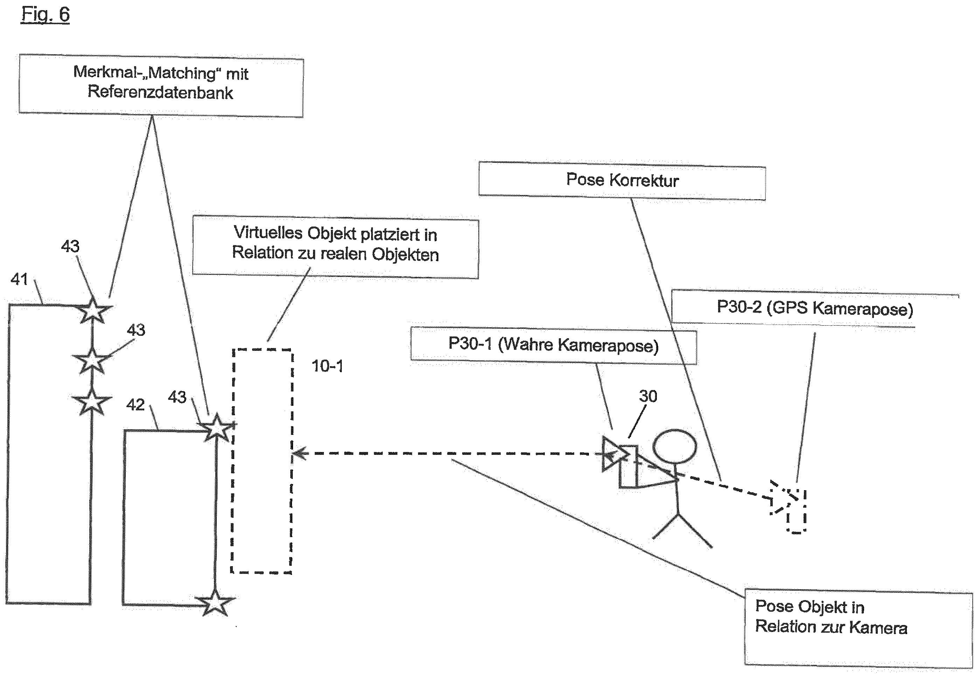

Figur 6 zeigt eine beispielhafte Szene einer realen Umgebung ähnlich der aus Figur 5 mit einem darin platzierten virtuellen Objekt 10-1 nachdem eine Posenverbesserung stattgefunden hat. Figur 6 zeigt einerseits den Mechanismus der Wiedererkennung von Bildmerkmalen im Bild und andererseits die entsprechende Korrektur von Bild-Pose und Objektpose. Insbesondere werden Bildmerkmale 43 (z.B. markante Merkmale der realen Objekte 41 und 42) mit entsprechenden Merkmalen von Referenzbildern einer Referenzdatenbank 4 verglichen und abgeglichen (bekannt als "Matching" von Bildmerkmalen).

Nun würde das virtuelle Objekt 10 auch in anderen Bildern (die eine richtige Pose haben) korrekt dargestellt, bzw. es könnte eine Platzierungskorrektur erfolgen. Mit der Platzierungskorrektur ist gemeint, dass der Benutzer beim perspektivischen Platzieren eines virtuellen Objekts durchaus die Höhe des platzierten Objektes über dem Boden falsch einschätzen könnte. Mittels zweier Bilder, die sich in Teilen der aufgenommenen Realität überschneiden, kann es möglich sein, eine Bodenebene zu extrahieren und die platzierten Objekte so umzuplatzieren, dass sie auf dem Boden stehen, aber in dem Bild, in dem sie ursprünglich platziert wurden, fast an der gleichen Stelle zu bleiben scheinen.

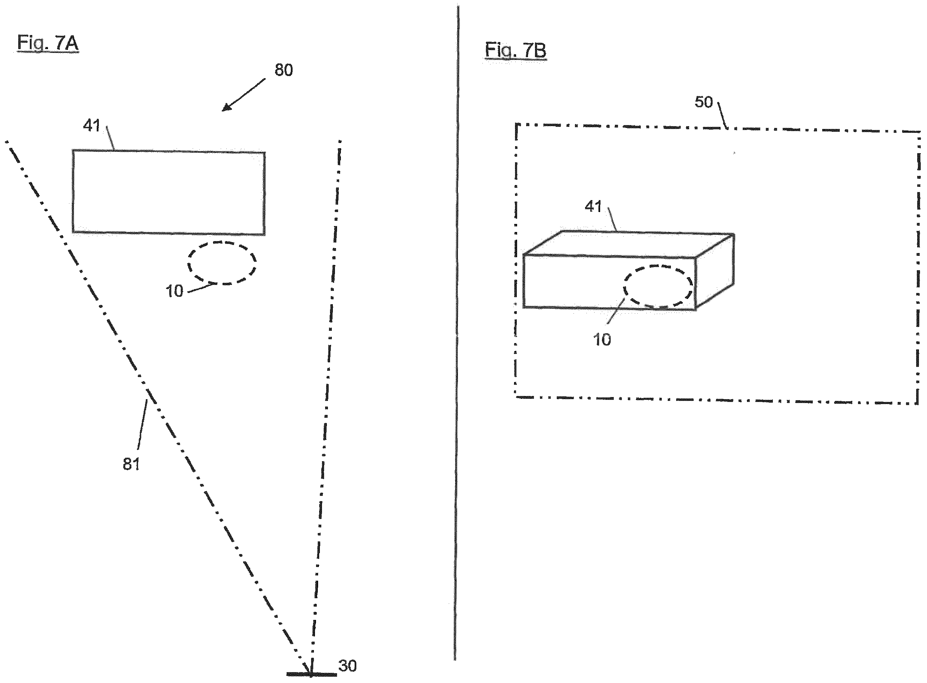

Figur 7A zeigt eine beispielhafte Kartenansicht der realen Welt, auf der ein virtuelles Objekt platziert wurde, während Figur 7B eine beispielhafte perspektivische Ansicht der gleichen Szene wie in Fig. 7A zeigt. Figur 7A und 7B dienen insbesondere der Erläuterung der benutzerunterstützten Feststellung der Kamerapose. Zum Beispiel ist es im Falle des Einsatzes von mobilen Geräten, welche nicht mit Kompass ausgestattet sind, nützlich, eine grobe Schätzung der Blickrichtung zu erhalten. Dazu kann der Benutzer, wie in Figur 7B dargestellt, wie gewohnt ein Bild 50 aufnehmen und ein virtuelles Objekt 10 in Relation zu einem realen Objekt 41 platzieren. Im Anschluss kann der Benutzer aufgefordert werden, die Position eines platzierten Objekts 10 auf einer Karte 80 oder einer virtuellen Ansicht 80 der Welt erneut anzuzeigen, wie in Figur 7A dargestellt. Aus der Verbindung zwischen GPS-Position des Bildes 50 und Objektposition des Objekts 10 auf der Karte 80 kann dann die Orientierung (Heading) des Bildes 50 in der Welt berechnet oder korrigiert werden. Besitzt das mobile Gerät auch kein GPS, kann das Verfahren auch mit zwei virtuellen Objekten oder einem virtuellem Objekt und der Angabe des Standortes durchgeführt werden. Des Weiteren kann dem Benutzer auch, wie beispielhaft in Figur 7A gezeigt, das "Field of View" (vgl. Indikator 81 des Bildausschnitts) des letzten Bildes angezeigt werden, und der Benutzer kann für eine Korrektur das "Field of View" auf der Karte interaktiv bewegen und neu orientieren. Dabei kann der Öffnungswinkel des "Field of Views" entsprechend der intrinsischen Kameraparameter gezeigt werden.

Gemäß dieser Ausführungsform beinhaltet das Verfahren insbesondere die folgenden Schritte: Bereitstellen einer Kartenansicht (vgl. Kartenansicht 80) auf dem Display des mobilen Geräts und Bereitstellen einer Auswahlmöglichkeit für den Benutzer zum Auswählen einer Blickrichtung bei der Aufnahme des Bildes. Auf diese Weise ist es möglich, die Blickrichtung, in die der Benutzer gerade mit der Kamera blickt, auf der Karte auszuwählen.

Gemäß einer weiteren Ausführungsform der Erfindung weist das Verfahren noch die folgenden Schritte auf: Platzieren des virtuellen Objekts in dem Bild der realen Umgebung und in einer auf dem Display des mobilen Geräts bereitgestellten Kartenansicht, sowie Ermitteln einer Orientierung des Bildes aus einer ermittelten Position des Bildes und der Position des virtuellen Objekts in der bereitgestellten Kartenansicht. So ist es ermöglicht, dass virtuelle Objekte auf der Karte und außerdem in dem perspektivischen Bild der realen Umgebung platziert werden, wobei daraus Rückschlüsse auf eine Orientierung des Benutzers gewonnen werden können.

Um es auch anderen Nutzern zu ermöglichen, ein mit virtuellen Objekten angereichertes Bild einer realen Umgebung aus der Ferne (beispielsweise auf einem Client, der mit dem Server z.B. über das Internet kommuniziert) zu betrachten und zu bearbeiten, ist in einer Ausführungsform der Erfindung vorgesehen, dass das Verfahren folgende weitere Schritte aufweist:
Es wird wenigstens ein Bild der realen Umgebung zusammen mit seinen Posedaten auf der Datenbank des Servers bereitgestellt. Danach erfolgt ein Zugriff auf das Bild der realen Umgebung auf dem Server und ein Übertragen auf ein Client-Gerät zur Darstellung des Bildes an dem Client-Gerät. Der Nutzer manipuliert das virtuelle Objekt oder fügt ein weiteres virtuelles Objekt durch entsprechendes Positionieren in dem an dem Client-Gerät dargestellten Bild der realen Umgebung hinzu. Das manipulierte virtuelle Objekt wird zusammen mit seinen modifizierten Posedaten entsprechend der Positionierung in dem an dem Client-Gerät dargestellten Bild, bzw. das weitere virtuelle Objekt wird zusammen mit seinen (neuen) Posedaten entsprechend der Positionierung in dem an dem Client-Gerät dargestellten Bild auf der Datenbank des Servers bereitgestellt, wobei die modifizierten Posedaten bzw. neuen Posedaten jeweils einen Rückschluss auf die globale Position und Orientierung des manipulierten bzw. weiteren virtuellen Objekts in dem an dem Client-Gerät dargestellten Bild zulassen. Damit kann in einem "Fernzugriff" an einem Client-Gerät die AR-Szene in dem Bild modifiziert bzw. mit weiterer virtueller Information angereichert werden und auf den Server zurückgeschrieben werden. Aufgrund der neu abgespeicherten globalen Position der manipulierten bzw. neuen virtuellen Information kann diese wiederum von anderen Benutzern über einen Zugriff auf den Server abgerufen werden und in einer der globalen Position entsprechenden AR-Szenerie betrachtet werden.

Darauf aufbauend weist das Verfahren in einer weiteren Ausführungsform noch die folgenden Schritte auf: Zugriff auf das Bild der realen Umgebung auf dem Server und Übertragen auf ein zweites Client-Gerät zur Ansicht des Bildes an dem zweiten Client-Gerät und Zugriff auf auf dem Server bereitgestellte virtuelle Objekte, wobei in der Ansicht des Bildes auf dem zweiten Client-Gerät diejenigen virtuellen Objekte dargestellt werden, deren globale Position innerhalb der realen Umgebung liegt, die in der Ansicht des Bildes an dem zweiten Client-Gerät dargestellt ist. Auf diese Art kann ein Betrachter an einem weiteren Client-Gerät eine Szenerie betrachten, in der diejenigen virtuellen Objekte dargestellt werden, die andere Benutzer bereits früher an einer entsprechenden Stelle positioniert haben (deren globale Position also innerhalb der realen Umgebung liegt, die in der Ansicht des Bildes an diesem Client-Gerät dargestellt ist). Mit anderen Worten sieht der Betrachter aus seinem Betrachtungswinkel diejenigen virtuellen Objekte, die andere Benutzer zuvor bereits in dem sichtbaren Blickfeld platziert haben.

## Patentansprüche

1. Verfahren zum Darstellen von Bildinformation in einer Ansicht einer realen Umgebung auf einer mobilen Vorrichtung, umfassend:
Aufnehmen eines Bildes (50) der realen Umgebung mit der Bildpose des Bildes in einem geographisch globalen Koordinatensystem;
Empfangen, von einer Servervorrichtung, eines Referenzbildes der realen Umgebung und einer Referenzpose des Referenzbildes von einer Referenzdatenbank;
Abstimmen von Merkmalen eines realen Objekts (41, 42), das in dem Bild dargestellt ist, mit entsprechenden Merkmalen eines realen Objekts, das in dem Referenzbild von der Referenzdatenbank dargestellt ist;
Erzeugen einer aktualisierten Bildpose des Bildes zumindest teilweise basierend auf der Referenzpose in Antwort auf eine Bestimmung, dass die Merkmale des in dem Bild dargestellten realen Objekts mit den entsprechenden Merkmalen des in dem Referenzbild dargestellten realen Objekts übereinstimmen;
Empfangen, von der Servervorrichtung (2), einer Anzeige einer Objektpose eines virtuellen Objekts (10) wobei die Objektpose auf dem geographisch globalen Koordinatensystem basiert;
Bestimmen einer Überlagerungsposition in dem Bild basierend auf der aktualisierten Bildpose und der Objektpose;
Anzeigen des virtuellen Objekts, das an der bestimmten Überlagerungsposition in dem Bild überlagert ist, auf einer Anzeigevorrichtung;
Empfangen einer Eingabe, die das virtuelle Objekt innerhalb des Bildes manipuliert, wobei das manipulierte virtuelle Objekt den modifizierten Posedaten zugeordnet ist; und
Senden, an die Servervorrichtung, einer Anforderung zum Ersetzen der Objektpose durch eine aktualisierte Objektpose basierend auf der aktualisierten Bildpose und die modifizierten Posedaten des virtuellen Objekts innerhalb des Bildes,
wobei eine globale Position und Orientierung des manipulierten virtuellen Objekts in Übereinstimmung mit der aktualisierten Objektpose und der aktualisierten Bildpose bestimmt wird.

2. Verfahren nach Anspruch 1, wobei die Eingabe, die das virtuelle Objekt manipuliert, einer Benutzereingabe entspricht, die über eine Benutzerschnittstelle empfangen wird.

3. Verfahren nach Anspruch 1, ferner umfassend:
Aufnehmen eines zweiten Bildes der realen Umgebung, wobei das zweite Bild mit einer zweiten Bildpose assoziiert ist; und
Überlagern des virtuellen Objekts auf dem zweiten Bild basierend auf der zweiten Bildpose und der aktualisierten Objektpose.

4. Verfahren nach Anspruch 1, wobei das Bild durch eine Kamera einer mobilen Vorrichtung aufgenommen wird, wobei das Verfahren ferner das Bestimmen der Bildpose basierend auf GPS-Daten umfasst, die von einem GPS-Sensor der mobilen Vorrichtung erzeugt werden.

5. Verfahren nach Anspruch 1, wobei das Bild von einer Kamera einer mobilen Vorrichtung aufgenommen wird, wobei das Verfahren ferner das Bestimmen der Bildpose basierend auf einer Kennung umfasst, die von einem drahtlosen lokalen Netzwerkadapter, (WLAN-Adapter) der mobilen Vorrichtung erkannt wird.

6. Verfahren nach Anspruch 1, wobei das Bild durch eine Kamera einer mobilen Vorrichtung aufgenommen wird, wobei das Verfahren ferner das Bestimmen der Bildpose basierend auf einer Kennung umfasst, die durch einen Funkfrequenz-Identifizierungssensor-RFID-Sensor, der mobilen Vorrichtung detektiert wird.

7. Computerlesbare Speichervorrichtung, die Anweisungen speichert, wobei die Anweisungen durch einen oder mehrere Prozessoren ausführbar sind, um das Verfahren nach einem der Ansprüche 1-6 auszuführen.

8. System, umfassend:
einen oder mehrere Prozessoren; und
einen Speicher, der mit dem einen oder den mehreren Prozessoren gekoppelt ist und computerlesbaren Code umfasst, der durch den einen oder die mehreren Prozessoren ausführbar ist zum:
Einleiten einer Aufnahme eines Bildes einer realen Umgebung mit der Bildpose des Bildes in einem geographisch globalen Koordinatensystem;
Empfangen, von einer Server-Vorrichtung, eines Referenzbildes der realen Umgebung und einer Referenzpose des Referenzbildes von einer Referenzdatenbank;
Abstimmen von Merkmalen eines realen Objekts, das in dem Bild dargestellt ist, mit entsprechenden Merkmalen eines realen Objekts, das in dem Referenzbild von einer Referenzdatenbank dargestellt ist;
Erzeugen einer aktualisierten Bildpose des Bildes zumindest teilweise basierend auf der Referenzpose in Antwort auf eine Bestimmung, dass die Merkmale des in dem Bild dargestellten realen Objekts mit den entsprechenden Merkmalen des in dem Referenzbild dargestellten realen Objekts übereinstimmen;
Empfangen einer Anzeige einer Objektpose eines virtuellen Objekts von der Servervorrichtung, wobei die Objektpose auf dem geographisch globalen Koordinatensystem basiert;
Bestimmen einer Überlagerungsposition in dem Bild basierend auf der aktualisierten Bildpose und der Objektpose;
Einleiten einer Anzeige des virtuellen Objekts, das an der bestimmten Überlagerungsposition in dem Bild überlagert ist, auf einer Anzeigevorrichtung;
Empfangen einer Eingabe, die das virtuelle Objekt innerhalb des Bildes manipuliert, wobei das manipulierte virtuelle Objekt den modifizierten Posedaten zugeordnet ist; und
Senden, an die Servervorrichtung, einer Anforderung zum Ersetzen der Objektpose durch eine aktualisierte Objektpose basierend auf der aktualisierten Bildpose und die modifizierten Posedaten des virtuellen Objekts innerhalb des Bildes,
wobei eine globale Position und Orientierung des manipulierten virtuellen Objekts in Übereinstimmung mit der aktualisierten Bildpose bestimmt wird.

9. System nach Anspruch 8, wobei der computerlesbare Code ferner durch den einen oder die mehreren Prozessoren ausführbar ist zum:
Empfangen des Referenzbildes und einer Referenzpose des Referenzbildes von der Referenzdatenbank; und
in Antwort auf das Bestimmen, dass das reale Objekt, das in dem Bild dargestellt ist, mit dem realen Objekt, das in dem Referenzbild dargestellt ist, übereinstimmt, Erzeugen der aktualisierten Bildpose teilweise basierend auf der Referenzpose.

10. System nach Anspruch 8, ferner umfassend eine Benutzerschnittstellenvorrichtung, die konfiguriert ist, um die Eingabe, die das virtuelle Objekt manipuliert, zu empfangen.

11. System nach Anspruch 8, wobei der computerlesbare Code ferner durch den einen oder die mehreren Prozessoren ausführbar ist, um von der Servervorrichtung eine modifizierte Version der aktualisierten Objektpose zu empfangen.

12. System nach Anspruch 8, ferner umfassend ein Fahrzeug, das den einen oder die mehreren Prozessoren beinhaltet.

13. System nach Anspruch 8, ferner umfassend eine am Kopf montierte Anzeigeeinheit, die den einen oder die mehreren Prozessoren und die Anzeigevorrichtung beinhaltet.

## Claims

1. A method for representing image information in a view of a real environment on a mobile device, comprising:
capturing an image of the real environment with the image pose of the image in a geographical global coordinate system;
receiving, from a server device, a reference image of the real environment and a reference pose of the reference image from a reference database;
matching features of a real object depicted in the image to corresponding features of a real object depicted in the reference image from the reference database;
generating an updated image pose of the image based at least in part on the reference pose in response to determining that the features of the real object depicted in the image match the corresponding features of the real object depicted in the reference image;
receiving, from the server device, an indication of an object pose of a virtual object, the object pose based on the geographical global coordinate system;
determining an overlay position in the image based on the updated image pose and the object pose;
displaying the virtual object overlaid at the determined overlay position in the image on a display device;
receiving input manipulating the virtual object within the image, wherein the manipulated virtual object is associated with modified pose data; and
sending, to the server device, a request to replace the object pose with an updated object pose based on the updated image pose and the modified pose data of the virtual object within the image,
wherein a global position and orientation of the manipulated virtual object is determined in accordance with the updated image pose.

2. The method of claim 1, wherein the input manipulating the virtual object corresponds to user input received via a user interface.

3. The method of claim 1, further comprising:
capturing a second image of the real environment, the second image associated with a second image pose; and
overlaying the virtual object on the second image based on the second image pose and the updated object pose.

4. The method of claim 1, wherein the image is captured by a camera of a mobile device, the method further comprising determining the image pose based on global positioning system (GPS) data generated by a GPS sensor of the mobile device.

5. The method of claim 1, wherein the image is captured by a camera of a mobile device, the method further comprising determining the image pose based on an identifier detected by a wireless local area network (WLAN) adapter of the mobile device.

6. The method of claim 1, wherein the image is captured by a camera of a mobile device, the method further comprising determining the image pose based on an identifier detected by a radio frequency identifier (RFID) sensor of the mobile device.

7. A computer readable storage device storing instructions, the instructions executable by one or more processors to perform the method of any of claims 1-6.

8. A system comprising:
one or more processors; and
a memory coupled to the one or more processors and comprising computer readable code executable by the one or more processors to:
initiate capture an image of a real environment with the image pose of the image in a geographic global coordinate system;
receive, from a server device, a reference image of the real environment and a reference pose of the reference image from a reference database;
match features of a real object depicted in the image to corresponding features of a real object depicted in the reference image from a reference database;
generate an updated image pose of the image based at least in part on the reference pose in response to determining that the features of the real object depicted in the image match the corresponding features of the real object depicted in the reference image;
receive, from the server device, an indication of an object pose of a virtual object, the object pose based on the geographic global coordinate system;
determine an overlay position in the image based on the updated image pose and the object pose;
initiate display the virtual object overlaid at the determined overlay position in the image on a display device;
receive input manipulating the virtual object within the image, wherein the manipulated virtual object is associated with modified pose data; and
send, to the server device, a request to replace the object pose with an updated object pose based on the updated image pose and the modified pose data of the virtual object within the image,
wherein a global position and orientation of the manipulated virtual object is determined in accordance with the updated image pose.

9. The system of claim 8, wherein the computer readable code is further executable by the one or more processors to:
receive the reference image and a reference pose of the reference image from the reference database; and
in response to determining that the real object depicted in the image matches the real object depicted in the reference image, generate the updated image pose based in part on the reference pose.

10. The system of claim 8, further comprising a user interface device configured to receive the input manipulating the virtual object.

11. The system of claim 8, wherein the computer-readable code is further executable by the one or more processors to receive a modified version of the updated object pose from the server device.

12. The system of claim 8, further comprising a vehicle that includes the one or more processors.

13. The system of claim 8, further comprising a head mounted display unit that includes the one or more processors and the display device.

## Revendications

1. Procédé de représentation d'informations d'image dans une vue d'un environnement réel sur un dispositif mobile, comprenant :
la prise d'une image (50) de l'environnement réel avec la pose d'image de l'image dans un système de coordonnées géographiquement global ;
la réception, par un dispositif serveur, d'une image de référence de l'environnement réel et d'une pose de référence de l'image de référence provenant d'une banque de données de référence ;
la mise en correspondance de caractéristiques d'un objet réel (41, 42), qui est représenté sur l'image, avec des caractéristiques correspondantes d'un objet réel, qui est représenté sur l'image de référence provenant de la banque de données de référence ;
la génération d'une pose d'image mise à jour de l'image au moins en partie sur la base de la pose de référence en réponse à une détermination que les caractéristiques de l'objet réel représenté sur l'image concordent avec les caractéristiques correspondantes de l'objet réel représenté sur l'image de référence ;
la réception, par le dispositif serveur (2), d'une indication d'une pose d'objet d'un objet virtuel (10),
dans lequel la pose d'objet est basée sur le système de coordonnées géographiquement global ;
la détermination d'une position de superposition sur l'image sur la base de la pose d'image mise à jour et de la pose d'objet ;
l'affichage de l'objet virtuel, qui est superposé à la position de superposition déterminée sur l'image, sur un dispositif d'affichage ;
la réception d'une entrée qui manipule l'objet virtuel à l'intérieur de l'image, dans lequel l'objet virtuel manipulé est associé aux données de pose modifiées ; et
l'envoi, au dispositif serveur, d'une demande de remplacement de la pose d'objet par une pose d'objet mise à jour sur la base de la pose d'image mise à jour et des données de pose modifiées de l'objet virtuel à l'intérieur de l'image,
dans lequel la position globale et l'orientation globale de l'objet virtuel manipulé sont déterminées conformément à la pose d'objet mise à jour et à la pose d'image mise à jour.

2. Procédé selon la revendication 1, dans lequel l'entrée qui manipule l'objet virtuel correspond à une entrée d'utilisateur qui est reçue par l'intermédiaire d'une interface utilisateur.

3. Procédé selon la revendication 1, comprenant en outre :
la prise d'une deuxième image de l'environnement réel, dans lequel la deuxième image est associée à une deuxième pose d'image ; et
la superposition de l'objet virtuel sur la deuxième image sur la base de la deuxième pose d'image et de la pose d'objet mise à jour.

4. Procédé selon la revendication 1, dans lequel l'image est prise par une caméra d'un dispositif mobile, dans lequel le procédé comprend en outre la détermination de la pose d'image sur la base de données GPS qui sont générées par un capteur GPS du dispositif mobile.

5. Procédé selon la revendication 1, dans lequel l'image est prise par une caméra d'un dispositif mobile, dans lequel le procédé comprend en outre la détermination de la pose d'image sur la base d'un identifiant qui est reconnu par un adaptateur de réseau local sans fil (adaptateur WLAN) du dispositif mobile.

6. Procédé selon la revendication 1, dans lequel l'image est prise par une caméra d'un dispositif mobile, dans lequel le procédé comprend en outre la détermination de la pose d'image sur la base d'un identifiant qui est détecté par un capteur RFID (capteur d'identification par radiofréquence) du dispositif mobile.

7. Dispositif de stockage lisible par ordinateur qui stocke des instructions, dans lequel les instructions peuvent être exécutées par un ou plusieurs processeurs pour exécuter le procédé selon l'une des revendications 1 à 6.

8. Système comprenant :
un ou plusieurs processeurs ; et
une mémoire qui est couplée à un ou aux plusieurs processeurs et qui comprend un code lisible par ordinateur qui peut être exécuté par le ou les plusieurs processeurs pour :
l'instauration d'une prise d'une image d'un environnement réel avec la pose d'image de l'image dans un système de coordonnées géographiquement global ;
la réception, par un dispositif serveur, d'une image de référence de l'environnement réel et d'une pose de référence de l'image de référence provenant d'une banque de données de référence ;
la mise en correspondance de caractéristiques d'un objet réel, qui est représenté sur l'image, avec des caractéristiques correspondantes d'un objet réel, qui est représenté sur l'image de référence provenant d'une banque de données de référence ;
la génération d'une pose d'image mise à jour de l'image au moins en partie sur la base de la pose de référence en réponse à une détermination que les caractéristiques de l'objet réel représenté sur l'image concordent avec les caractéristiques correspondantes de l'objet réel représenté sur l'image de référence ;
la réception d'une indication d'une pose d'objet d'un objet virtuel par le dispositif serveur, dans lequel la pose d'objet est basée sur le système de coordonnées géographiquement global ;
la détermination d'une position de superposition sur l'image sur la base de la pose d'image mise à jour et de la pose d'objet ;
l'instauration d'un affichage de l'objet virtuel, qui est superposé à la position de superposition déterminée sur l'image, sur un dispositif d'affichage ;
la réception d'une entrée qui manipule l'objet virtuel à l'intérieur de l'image, dans lequel l'objet virtuel manipulé est associé aux données de pose modifiées ; et
l'envoi, au dispositif serveur, d'une demande de remplacement de la pose d'objet par une pose d'objet mise à jour sur la base de la pose d'image mise à jour et des données de pose modifiées de l'objet virtuel à l'intérieur de l'image,
dans lequel la position globale et l'orientation globale de l'objet virtuel manipulé sont déterminées conformément à la pose d'image mise à jour.

9. Système selon la revendication 8, dans lequel le code lisible par ordinateur peut en outre être exécuté par le ou les plusieurs processeurs pour :
recevoir l'image de référence et une pose de référence de l'image de référence provenant de la banque de données de référence ; et
en réponse à la détermination que l'objet réel qui est représenté sur l'image concorde avec l'objet réel qui est représenté sur l'image de référence, générer la pose d'image mise à jour en partie sur la base de la pose de référence.

10. Système selon la revendication 8, comprenant en outre un dispositif d'interface utilisateur qui est configuré pour recevoir l'entrée qui manipule l'objet virtuel.

11. Système selon la revendication 8, dans lequel le code lisible par ordinateur peut en outre être exécuté par le ou les plusieurs processeurs pour recevoir une version modifiée de la pose d'objet mise à jour du dispositif serveur.

12. Système selon la revendication 8, comprenant en outre un véhicule qui incorpore le ou les plusieurs processeurs.

13. Système selon la revendication 8, comprenant en outre une unité d'affichage montée sur la tête qui incorpore le ou les plusieurs processeurs et le dispositif d'affichage.
